**Europäisches Patentamt**

**European Patent Office**

**Office européen des brevets**

(19)

(11) Veröffentlichungsnummer: **0 122 514**
**B1**

(12) **EUROPÄISCHE PATENTSCHRIFT**

(45) Veröffentlichungstag der Patentschrift:
**03.08.88**

(51) Int. Cl.⁴: **B 01 J 4/02,** B 67 D 5/02

(21) Anmeldenummer: **84103294.9**

(22) Anmeldetag: **26.03.84**

(54) Vorrichtung zur Abgabe wenigstens eines Konzentrats für wenigstens eine Zugabe zu einem Lösungsmittel, auch mit Betätigungseinrichtung.

(30) Priorität: **13.04.83 DE 3313262**

(43) Veröffentlichungstag der Anmeldung:
**24.10.84 Patentblatt 84/43**

(45) Bekanntmachung des Hinweises auf die Patenterteilung:
**03.08.88 Patentblatt 88/31**

(84) Benannte Vertragsstaaten:
**AT CH DE FR GB LI NL SE**

(56) Entgegenhaltungen:
**DE - A - 1 931 670**
**FR - A - 1 296 950**
**FR - A - 2 319 544**
**US - A - 2 695 614**
**US - A - 3 070 094**
**US - A - 3 842 836**
**US - A - 4 295 828**
**US - A - 4 515 586**

(73) Patentinhaber: **Eppendorf Gerätebau Netheler + Hinz GmbH, Barkhausenweg 1, D-2000 Hamburg 63 (DE)**

(72) Erfinder: **Gerken, Hero, Susebekweg 10, D-2000 Hamburg 63 (DE)**
Erfinder: **Kühn, Günther, Werfelring 33E, D-2000 Hamburg 71 (DE)**

(74) Vertreter: **Kretzschmar, Otto Robert, Dipl.-Ing., Beim Strohhause 34, D-2000 Hamburg 1 (DE)**

ACTORUM AG

### Beschreibung

Die Erfindung betrifft eine Konzentratkapsel zur Ausgabe wenigstens eines Konzentrats als wenigstens eine Zugabe zu einem Lösungsmittel.

Ferner bezieht sich die Erfindung auf eine Betätigungseinrichtung für eine solche Konzentratkapsel.

Aus der US-A-3 070 094 ist eine Vorrichtung zur Speicherung, Mischung und Ausgabe von Medikamenten bekannt, die getrennt von einem Verdünnungsmittel in verschiedenen Kammern gehalten werden. Die Anordnung besitzt dabei einen Längswandteil, in welchem zwischen zwei an einer herausgeführten Kolbenstange angeordnete Kolben das Medikament gehalten ist. Dieses Längswandteil geht in die Wandteile der anderen grösseren Querschnitt aufweisenden Kammer mit dem Verdünnungsmittel über und endet in einem eine Kanüle aufweisenden Ausgabekonus für den ein lösbares Verschlusselement vorgesehen ist. Wenn die herausgeführte Kolbenstange eingedrückt wird, gelangt das Medikament in die Kammer mit dem Verdünnungsmittel, so dass dann der verdünnte Wirkstoff nach Abnahme des Verschlusselements durch die Kanüle ausgegeben wird.

Der Zweck dieser bekannten Ausführung liegt darin, die beiden Stoffe getrennt, aber für eine Vermischung bereitzuhalten. Dabei soll zunächst das Medikament trocken aufbewahrt werden und ohne erheblichen Aufwand an Behältern und anderen Vorrichtungen erst vor dem Einsatz gemischt werden.

Entsprechend werden nach der US-A-2 965 614 in einer Flasche zwei Substanzen getrennt gehalten. Diese Flasche ist durch einen Boden unten abgeschlossen und hat eine mittlere Einschnürung, an welcher ein Pfropfen mit Schrägflächen gehalten ist. In dem einen Flaschenraum wird ein trockener Stoff bereitgehalten und der andere Flaschenraum ist mit einer Flüssigkeit gefüllt und durch einen eindrückbaren Stopfen abgeschlossen. Durch Eindrückung dieses Stopfens wird vermittels der inkompressiblen Flüssigkeit der Pfropfen aus seinem Sitz gedrückt, so dass dann die Flüssigkeit in die andere Flaschenkammer eintreten kann. Die Mischung oder Lösung kann dann mit einer Saugkanüle oder dergleichen entnommen werden, die durch den Stopfen gestochen wird.

Jeweils ist ein Behälter mit zwei Räumen vorgesehen, aus welchen die Wirkstoffe nach einer vorhergehenden Verdünnung entnommen werden können.

Demgegenüber bezieht sich die Erfindung auf eine Konzentratkapsel, aus welcher das Konzentrat in unverdünnter Form freigesetzt werden kann.

Beispielsweise von der Firma Merck sind ampullenartige Gefässe bekannt, welche Konzentrate aufnehmen und einteilig mit einem sogenannten Längswandteil einen oberen Trichter aufweisen, der über eine Einschnürung mit dem sogenannten Längswandteil bzw. Hauptgefäss verbunden ist, das unten über einen Trichter in einen Ausgabestutzen übergeht. In letzterem und in der oberen halsartigen Einschnürung sind folienartige Zwischenwände angeordnet, die von einem Glasstab durchstossbar sind, um das Konzentrat aus dem Längswandteil in ein vorbereitetes, mit einem entsprechenden Aufnahmestutzen, Eichmarke und dergleichen versehenes Gefäss auszugeben. Das Konzentrat fliesst dabei durch Schwerkraft aus. Die Kapsel selbst muss in den Aufnahmestutzen eingefädelt werden. Der zeitliche Aufwand ist erheblich. Rückstände verbleiben in der Kapsel. Die genaue Mischung im Eichgefäss ist daher zweifelhaft. Dies mag in mancher Anwendung von untergeordneter Bedeutung sein. Nachteilig ist jedenfalls ein gewisser Rest in der Konzentratkapsel, die zerreissbar ist.

Ein weiterer Nachteil liegt darin, dass der verhältnismässig langgestreckte, zylindrische Längswandteil zwischen den folienartigen Zwischenwänden frei von jeder Abstützung ist, so dass ein Umfangsdruck sich in einen Axialdruck der enthaltenen Flüssigkeit fortsetzt. Dadurch besteht die Gefahr der Sprengung wenigstens einer durch eine Folie gebildeten Abflusssperre, so dass auch dadurch die einwandfreie Handhabung beeinträchtigt ist.

Einbezogen wird zum Stand der Technik ein Behälter, der mit einem Dorn aufstechbar ist. Das ist nachteilig und umständlich.

Wenn von einem Konzentrat die Rede ist, dann handelt es sich in der bevorzugten Anwendung der Erfindung um Pflanzenschutzmittel, Insektizide, Herbizide; vor allem aber auch um Desinfektionsmittel und dergleichen, die als Konzentrat geliefert werden und in einem grösseren Behälter im Wasser zu einer Lösung aufgelöst werden, die in der entstehenden Verdünnung anwendbar ist. Dabei versteht sich, dass für bestimmte Anwendungen auch mehrere Konzentrate einzubringen sind, die für sich untereinander getrennt gehalten werden müssen, aber in einer Ausgabe nacheinander in einen flüssigen Träger, insbesondere in einen grossen Wasservorrat, ausgegeben werden können, um dann in diesem eine für eine bestimmte Anwendung vorteilhafte Lösung zu bilden.

Ein Problem besteht darin, ein Konzentrat in einer Kapsel, insbesondere einer Konzentratkapsel, abgedichtet zu halten und die Voraussetzungen dafür zu schaffen, dass das Konzentrat bei Öffnung der Kapsel vollständig ausgegeben wird.

Daher liegt eine Aufgabe der Erfindung darin, eine Konzentratkapsel so auszugestalten, dass bei einer Öffnung das Konzentrat bzw. in weiterer Ausgestaltung auch mehrere Konzentrate voneinander getrennt nacheinander vollständig ausgegeben werden und gewährleistet ist, dass das oder die Konzentrate vollständig in eine Flüssigkeit ausgegeben werden, in welcher das Konzentrat oder die Konzentrate eine Lösung bilden sollen.

Die Aufgabenstellung bezieht dabei auch eine Betätigungseinrichtung für die Konzentratkapsel ein, welche gegebenenfalls auch Sicherheitsfunktionen für die Ausgabe des im konzentrierten Zustand aggressiven Konzentrats erst nach einer bestimmten Betätigungsreihenfolge ermöglicht.

Diese Aufgabe wird erfindungsgemäss gelöst durch die Ausführung der Kapsel mit einem Längswandteil, in welchem ein Konzentrat zwischen stirnseitigen Abschlüssen gehalten ist, wobei in dem Längswandteil wenigstens zwei Stirn- oder Kolbenwandteile kolbenartig mit Abdichtung zum Längswandteil beweglich angeordnet sind, der Längswandteil am Ausschubende zylindrisch offen ist, und am anderen Ende des Längswandteils eine Verriegelung für eine Betätigungseinrichtung zur Verschiebung wenigstens eines Kolbenwandteils in dem Längswandteil und aus diesem heraus vorgesehen und für die Verriegelung ein Anschlusselement eines Betätigungselementes oder -stössels für wenigstens einen Stirn- oder Kolbenwandteil vorgesehen ist.

Durch die offene Ausführung des Ausschubendes und der Anordnung einer Verriegelung am anderen Ende des Längswandteils wird eine Konzentratkapsel geschaffen, die nicht nur leicht aufzubewahren ist und mit wenigen Teilen auskommt, sondern auch eine einfache Konzentratausgabe ohne zusätzliche Mittel ermöglicht, wobei dann vor allem auch Betätigungseinrichtungen für verschiedene Kapseln eingesetzt werden können.

Der Ausdruck Längswandteil bezieht einen langgestreckten äusseren, beispielsweise tubenartigen oder im wesentlichen zylindrischen Wandteil ein, wobei im Sinne der Erfindung auch noch andere Formen vorbehalten sind. Der Hinweis auf wenigstens zwei Stirn- oder Kolbenwandteile sieht auch die Unterbringung und Ausgabe mehrerer Konzentrate nacheinander vor.

Die Kapsel wirkt mit einem Verdrängersystem, selbst wenn die beiden Stirn- oder Kolbenwandteile nicht miteinander verbunden sind, aber zwischen ihnen ein inkompressibles Medium, wie eine Flüssigkeit, angeordnet ist. Ein Druck auf einen Stirn- oder Kolbenwandteil in Richtung auf den Innenraum der Konzentratkapsel führt dann zur Verdrängung des wenigstens einen anderen Kolbenwandteils durch die zwischen beiden Stirn- oder Kolbenwandteilen enthaltene Flüssigkeit. Eine solche Ausführung nutzt den vorhandenen Konzentratkapselraum optimal aus.

In einer vorteilhaften Ausgestaltung weist ein als Führungselement ausgeführter Stirn- oder Kolbenwandteil wenigstens eine sich schräg nach aussen oben erstreckende Dichtungslippe neben dem Umfangsrand des Kolben- oder Stirnwandteils bzw. einen sich an diesen anschliessenden Randansatz auf. Hierdurch wird zugleich eine Führungsfunktion erreicht, die besonders wesentlich ist, wenn die beiden Stirn- oder Kolbenwandteile miteinander verbunden sind, weil dann der ausgeschobene Stirn- oder Kolbenwandteil in seiner Richtung gehalten werden kann.

In einer weiteren zweckmässigen Ausgestaltung ist wenigstens ein beiden Kolbenwandteilen zugeordneter Pressstempel wenigstens an dem Kolbenwandteil festgelegt, an dessen Seite der Längswandteil mit der Verriegelung ausgeführt ist. Hierbei wird bereits eine Mehrfachausnutzung einbezogen, in welcher vorbehalten bleibt, dass ein im Betrieb herausgedrückter Kolbenwandteil abfällt, oder dass der herausgedrückte Teil als Rührelement dient.

Bevorzugt wird jedoch eine Doppelkolbenausführung der Stirnwandteile, in welcher der wenigstens eine Pressstempel mit beiden Stirn- oder Kolbenwandteilen verbunden ist. Dieses bestimmt eine besonders einfache Konzentratkapsel mit zwei in einem Längswandteil beweglichen Stirnwänden, deren gemeinsame Bewegung schon zur Öffnung des Innenraums führt, wobei eine Weiterbewegung zugleich die Ausdrückung des Inhalts bewirkt. Dies setzt die Verbindung der Stirnwandteile als Doppelkolbenausführung durch den wenigstens einen Pressstempel voraus. Letzterer kann auch vorteilhaft mit zwei oder mehr Verbindungsstangen zwischen entsprechend mehreren Stirnwandteilen aufgelöst sein.

In einer zweckmässigen Ausgestaltung sind mehrere kolbenartige Stirnwände in der Kapsel hintereinander vorgesehen und jeweils durch Pressstempel verbunden, und die Stirnwände sind bei Verschiebung aus dem Längswandteil abwerfbar. Hierdurch wird eine besondere Raumaufteilung erreicht. Der Ausdruck Verbindung bezieht auch eine zum Teil lösbare Anordnung dadurch ein, dass die Pressstempel jeweils mit einer kolbenartigen Stirnwand in axialer Richtung lösbar verbunden sind, die nach Ausdrückung aus dem Längswandteil abziehbar, insbesondere durch Reibschluss, abstreifbar gehalten ist. Hierdurch ist es möglich, mit einfachen Mitteln eine mehrfach dosierte oder abgestufte Konzentratausgabe herbeizuführen.

Bevorzugt wird dabei, dass das Ende mit der Verriegelung durch eine Stirnplatte abgedeckt ist, welche eine verschlüsselte Öffnung für ein unrundes Betätigungselement aufweist, welche verschlüsselte Öffnung das in axialer Richtung bewegbare Betätigungselement nur in einer Umfangsrichtung einsetzbar zulässt.

Das bedeutet, dass die Erfindung eine Verschlüsselung vor der Öffnung einbezieht. Dieses ist bei einer möglichen Betätigung durch Kinder wesentlich, um unter Umständen eine Benachteiligung, wie Verletzung oder Verätzung, zu vermeiden. Der Ausdruck verschlüsselte Öffnung bezieht dabei ein, dass schon die Betätigungseinrichtung in einer bestimmten Umfangsausrichtung zur Längsachse aufzusetzen ist. Die dafür erforderliche Aufmerksamkeit gewährleistet im allgemeinen auch den richtigen Einsatz der Betätigungseinrichtung in bezug zu den Stirn- oder Querwandteilen der Konzentratkapsel. In diesem Zusammenhang ist in einer einfachen Ausführung ein unrunder Betätigungsstössel als Pressstempel in einer durch die Konzentratkapsel vorgesehenen Ausrichtung in diese einschiebbar und auf einen Kolbenwandteil aufsetzbar, wobei der Pressstempel in einer langgestreckten, rohrartigen Führung bewegbar ist. Hierdurch wird eine besondere Sicherheit herbeigeführt.

In einer weiteren Ausgestaltung ist der wenigstens eine Pressstempel im Querschnitt kreuzförmig ausgeführt. Hierdurch wird einerseits Material gespart und andererseits eine erhebliche Festigkeit erreicht. Weiterhin wird in Verbindung mit der Betätigungseinrichtung der Rühreffekt erhöht.

Die Betätigung der Kapsel kann dadurch verbessert werden, dass das Betätigungselement an wenigstens einem Profilierungsschenkel Abstufungen aufweist, die eine beschränkte Bewegung durch eine Stirnplatte zulässt. Dadurch ist es auch gerade bei Unterteilung der Konzentratkapsel in mehrere Aufnahmeräume für Zugaben möglich, solche Zugaben in definierter Weise nacheinander auszubringen. Einbezogen wird der schrittweise Einsatz in Abhängigkeit von einer Drehung des Betätigungselementes.

Wenn im Vorstehenden die Sicherung besonders hervorgehoben wird, liegt eine bevorzugte Ausgestaltung darin, dass der Stirnplatte eine drehbare Scheibe mit einer entsprechend profilierten Eingriffsprofilierung zugeordnet ist. Durch die zusätzliche drehbare Platte, besonders bezüglich der Stirnplatte mit der verschlüsselten Öffnung, besteht vor einem Einsatz der Betätigungseinrichtung mit dem Pressstempel die Notwendigkeit einer Ausrichtung der sogenannten drehbaren Platte zu der vorhandenen Stirnplatte.

Bevorzugt wird dabei, dass die Eingriffsöffnung unsymmetrisch und flach, insbesondere aber mittig geschlossen und mit aussermittigen Durchgängen ausgeführt ist. Dabei ist das Betätigungselement mit entsprechend aussermittig ausgeführten Schubteilen versehen.

Durch die soweit beschriebene Ausführung ergibt sich auch in einer noch zu erörternden Vervielfachung von Kapselräumen für verschiedene Medien, dass eine sichere Vorratshaltung gewährleistet ist, wobei die erwähnte Betätigungseinrichtung stangenartig ausgeführt sein und auch als Rührelement in einer Aufnahmeflüssigkeit zur Herstellung der Lösung dienen kann.

Wenn aber von mehreren Konzentrateinheiten die Rede ist, wird nicht nur bevorzugt, dass mehrere kolbenartige Stirnwände vorhanden sind, sondern in einer bevorzugten Ausgestaltung mit einer Öffnungseinrichtung, die mit geringerem Druck arbeitet, liegt eine zweckmässige Lösung darin, dass die kolbenartigen Stirnwände jeweils oberhalb sich erweiternder Abschnitte der Kapsel geführt sind und nach beschränkter Bewegung entsprechend der Länge eingeschnürter Kapselabschnitte frei nach unten bewegbar sind. Hierdurch ist es möglich, dass die kolbenartigen Stirnwände nach einer geringen Bewegung durch die sich unten erweiternden Abschnitte jeweils freikommen und nach unten heraustreten, wobei durch eine Bemessung die untere kolbenartige Stirnwand zunächst freigegeben wird, so dass das Konzentrat ausströmt. Wenn der Druck auf den Einsatz mit den kolbenartigen Stirnwänden in diesem Zusammenhang durch eine Flüssigkeitsströmung aufgebracht wird, dient diese in der zuletzt erwähnten Ausführung gerade auch als Spülmedium zur restlosen Ausgabe des enthaltenen Konzentrats.

Dabei kann zur Dosierung eine Mehrfach-Kolbenanordnung in einem langgestreckten Längswandteil bewegbar angeordnet sein. Dies kann dann zweckmässig sein, wenn mehrere Konzentrate, die nicht unmittelbar unter sich zu Reaktionen kommen sollen, in Bereitschaft gehalten werden, damit sie nacheinander in eine Lösung gebracht werden können. Für eine solche Anwendung ist die erfindungsgemässe Konzentratkapsel mit mehreren Stirn- oder Kolbenwandteilen, die nach dem Verdrängungsprinzip bewegbar sind, eine vorteilhafte Lösung.

Ein runder Querschnitt des Längsseitenwandteils der Konzentratkapsel ist vorteilhaft, wenn eine Drehung der Stirn- oder Kolbenwandteile vor dem Ausschieben durch Einbringung eines verschlüsselten Betätigungsstössels erfolgt. Einbezogen wird aber vorteilhaft auch, dass der Querschnitt des Längswandteils unrund, insbesondere eckig, ist. Dabei sind die Stirn- oder Kolbenwandteile entsprechend profiliert. Eine solche Gestaltung schliesst eine Relativdrehung aus. Die Gestaltung ist aber auch für einen verschlüsselten Einsatz eines Betätigungsstössels, insbesondere im Zusammenhang mit einer drehbaren Platte, als Schlüsselscheibe vorteilhaft. Dabei muss aber die drehbare Platte in einem in Draufsicht runden Anschlussflansch gehalten sein.

Vorteilhaft ist am Ende des Längswandteils mit der Verriegelung eine Abdichtung für eine Aufnahme eines Betätigungsstössels vorgesehen. Einbezogen wird dabei, dass die Abdichtung in Umfangsrichtung aussen vorgesehen ist. Eine solche Abdichtung ist unter dem Gesichtspunkt günstig, dass bei der Ausdrückung des Konzentrats nicht Flüssigkeit in die Betätigungseinrichtung oder aber auch in die Konzentratkapsel oberhalb der in Verdrängungsrichtung bewegten Kolbenwand einströmt.

Es versteht sich bei der erfindungsgemässen Ausführungsform mit der Betätigungseinrichtung, dass durch diese von oben ausserhalb der Flüssigkeit Luft nachströmt, damit nicht gegen ein Vakuum gearbeitet werden muss. Um ein Ansaugen aus der bereits eine Lösung darstellenden Flüssigkeit, in welche das Konzentrat ausgegeben ist, zu vermeiden, ist die bereits erwähnte Abdichtung an sich und vorteilhaft am äusseren Rand der Stirnseite des obersten Elements der Kapsel bzw. des Längswandteiles vorgesehen. Dadurch wird die Konzentratkapsel-Anordnung, insbesondere auch die Betätigungseinrichtung, als Rührelement vor einer eindringenden Verunreinigung durch die Lösungsflüssigkeit bewahrt.

Wenn oben in einer Ausführung von einem erweiterten Längswandteil die Rede ist, wird einbezogen, dass der untere erweiterte Längswandteil radiale und axiale Ausströmöffnungen hat.

Gemäss einer weiteren Ausgestaltung weist der Betätigungsstössel ein Gegenverriegelungselement zur Verriegelung auf, wobei Bajonett-Verschlüsse, Schraubverschlüsse und Schnappverschlüsse einbezogen sind. Hierdurch können verschiedenartige Anschlüsse vorgesehen sein. Dabei wird ein Drehverschluss, wie ein Bajonett-Verschluss, einbezogen, wobei in einem solchen Zusammenhang ein Betätigungsstössel nach obigen Angaben vorteilhaft mit einem unrunden Querschnitt ausgeführt ist, so dass durch Verdrehung des Betätigungsstössels eine Lösung des Verschlusses vorgesehen ist, wenn eine Verdrehung am Handgriff stattfindet, der durch eine als Rührelement ausgeführte Stange über einen langgestreckten Schaftteil von den Eingriffsmitteln an der Konzentratkapsel abgesetzt ist.

Wenn oben im Zusammenhang mit einer verschlüsselten Öffnung auch eine drehbare Scheibe mit entsprechend profilierter Eingriffsöffnung vorgesehen ist, werden zweckmässig eine Stelleinrichtung, insbesondere Spiralfeder, zwischen der drehbaren Scheibe einerseits und der festen Stirnplatte andererseits und die Führung der drehbaren Scheibe mit einer Eingriffsanordnung an der Stirnplatte einbezogen.

In der oben erwähnten Ausführung mit zwei kolbenartig beweglichen Stirn- oder Kolbenwandteilen ist zweckmässig vorgesehen, dass an dem Ende des Längswandteils ohne Verriegelung die benachbarte Kolbenwand durch eine Lasche befestigt ist. Dadurch kann bei Verdrängung, beispielsweise durch eine enthaltene, inkompressible Flüssigkeit, die benachbarte Kolbenwand herausgedrückt werden, wobei die in Bewegungsrichtung vornliegende Kolbenwand aus dem Längswandteil herausbewegt und aus der Funktionsrichtung entfernt, aber noch gehalten wird.

Besondere Vorteile ergeben sich aus der Kombination der Konzentratkapsel mit der langgestreckten, stielartigen Betätigungseinrichtung, durch die die zusammengesetzten Teile auch als Rührelement verwendbar sind. Das führt zugleich zur einwandfreien Ausspülung der Konzentratkapsel.

Die besonders vorteilhaften Merkmale gehen aus der Fassung der Ansprüche hervor.

Die Erfindung wird im folgenden anhand von Ausführungsbeispielen erläutert, die in der Zeichnung dargestellt sind. In der Zeichnung zeigen:

Fig. 1 eine schematische Seitenansicht im Schnitt hinsichtlich des Längswandteils mit zwei Kolbenwandteilen,

Fig. 2 eine der Fig. 1 entsprechende Ansicht zur Erläuterung eines anderen Arbeitszustandes,

Fig. 3 eine der Fig. 1 entsprechende Ansicht einer anderen Ausführungsform,

Fig. 4 eine Seitenansicht der Konzentratkapsel in einer weiteren Ausgestaltung,

Fig. 5 eine auseinandergezogene Seitenansicht der Konzentratkapsel und einer Betätigungseinrichtung,

Fig. 6 eine zusammengesetzte Anordnung der Betätigungseinrichtung und der Konzentratkapsel in einem Behälter,

Fig. 7 eine Seitenansicht einer Konzentratkapsel mit einer Deckplattenausführung an der Seite der Betätigungseinrichtung,

Fig. 8 einen Querschnitt durch eine beispielsweise vorteilhafte Ausführungsform des Betätigungsstössels,

Fig. 9 eine Draufsicht auf eine besondere Ausführung der Deckplatten-Anordnung,

Fig. 9a eine Seitenansicht des Oberteils einer Konzentratkapsel im Schnitt,

Fig. 10 eine schematische Seitenansicht einer besonderen Ausführungsform für unterteilte Aufnahmeräume,

Fig. 11 eine der Fig. 10 entsprechende Seitenansicht zur Erläuterung der Ausgabe verschiedener Stirn- oder Kolbenwandteile in lösbarem Zusammenhang über einem Behälter,

Fig. 12 eine teilweise im Schnitt dargestellte Seitenansicht einer weiteren Ausführungsform der Erfindung,

Fig. 13 eine im Schnitt dargestellte Seitenansicht einer weiteren Ausgestaltung der Erfindung in schematischer Darstellung,

Fig. 14 eine der Fig. 13 entsprechende Ansicht einer weiteren Ausführungsform in einer anderen Funktionsstellung,

Fig. 15 eine teilweise im Schnitt dargestellte Betätigungseinrichtung zur näheren Erläuterung der Fig. 5,

Fig. 16a–d verschiedene Seitenansichten und Draufsichten zur Erläuterung einer speziellen Ausgestaltung auch unter Bezugnahme auf Fig. 15, wobei Fig. 16a eine Seitenteilansicht von Fig. 15 im Schnitt, 16b eine Draufsicht auf einen Längswandteil mit Stirnplatte, Fig. 16c einen Schnitt längs der Linie XVIc–XVIc in Fig. 15 und Fig. 16d eine Seitenansicht von Fig. 16c zeigen.

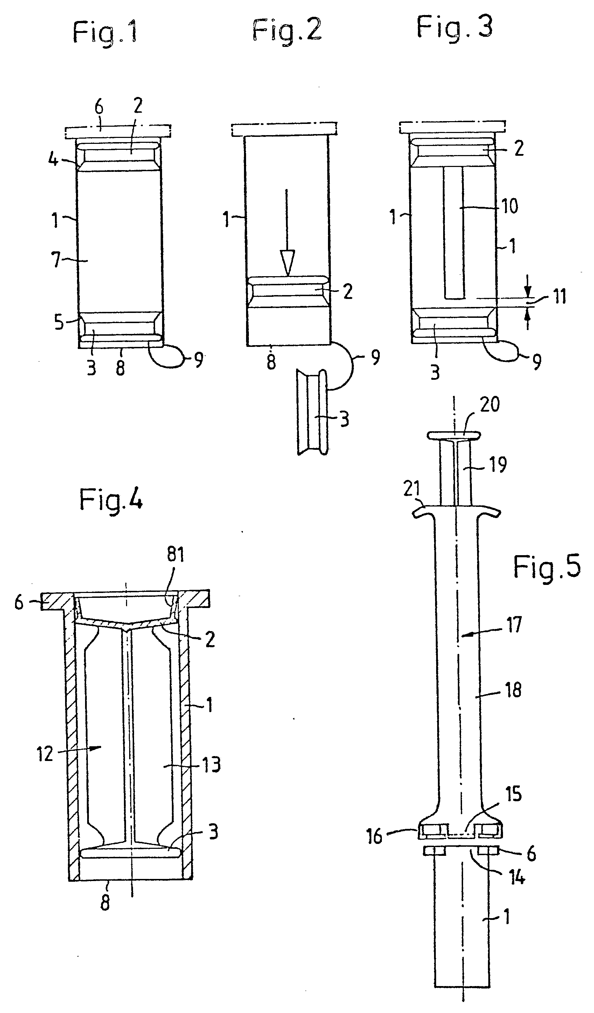

Die Konzentratkapsel der Erfindung ist in einer einfachen Ausführungsform in den Fig. 1 und 2 dargestellt. Dabei sind in dem Längswandteil 1 zwei Stirn- oder Kolbenwandteile 2, 3 verschiebbar angeordnet. Sie sind mit Dichtungsmitteln 4, 5 zum Längswandteil 1 ausgestattet und in der Ausführung nach Fig. 1 nicht miteinander verbunden. Durch jeweils mit Abstand voneinander am Längswandteil anliegende, herumlaufende Dichtungen ergibt sich eine Führung. Hierbei wird einbezogen, dass die Konzentratkapsel einen insgesamt mit 6 bezeichneten Anlage- oder Befestigungsflansch für den Einsatz einer Betätigungseinrichtung aufweist. Diese Einzelheiten sind in Fig. 1 nicht näher dargestellt. Es wird jedoch bemerkt, dass die Betätigungseinrichtung vorgesehen ist, um den Stirn- oder Kolbenwandteil 2 von aussen zu beaufschlagen und in das Innere des Längswandteils 1 zu verschieben.

Ein zwischen den Längswandteilen 2 und 3 angeordnetes Medium 7, insbesondere eine inkompressible Flüssigkeit, bildet dabei eine Druckverbindung, die bewirkt, dass auch der Stirn- oder Kolbenwandteil 3 entsprechend bewegt und aus der unteren Öffnung 8 des Längswandteils 1 ausgestossen wird.

Zwischen letzterem und dem sogenannten unteren Stirn- oder Kolbenwandteil 3 ist eine Lasche 9 angeordnet, die den ausgestossenen Stirn- oder Kolbenwandteil 3 ausserhalb der Projektion des Längswandteils 1 zu halten imstande ist.

Gemäss Fig. 3, in der der Längswandteil auch mit 1 bezeichnet ist, und die Stirn- oder Kolbenwandteile 2, 3 vorgesehen sind, ist zusätzlich ein Pressstempel 10 angeordnet, der am oberen Stirn- oder Kolbenwandteil 2 befestigt und mittig auf den anderen Stirn- oder Kolbenwandteil 3 gerichtet ist und mit einem kurzen Abstand 11 vor diesem endet. Dadurch ergibt sich die Möglichkeit, als Inhalt der Konzentratkapsel auch kompressible Stoffe vorzusehen, aber für eine dosierte Ausgabe zu sorgen.

Die Fig. 4 zeigt die besonders bevorzugte Ausführungsform mit dem Längswandteil 1, aber in einer insgesamt mit 12 bezeichneten Doppelkolbenausführung der beiden Stirnwandteile 2, 3. In dieser ist der Pressstempel 13 mit beiden Stirnwandteilen 2, 3 fest verbunden. Hierdurch wird eine absolute gleiche Bewegung beider kolbenartigen Stirnwandteile gewährleistet. Der Stirnwandteil 2, insbesondere der Stirnwandteil, welcher durch den Längswandteil geschoben wird, ist dabei als Führungselement ausgeführt. Dieses wird dadurch erreicht, dass sich eine im wesentlichen axial, jedoch schräg nach aussen oben erstreckende Dichtungslippe 81 an einem auch am Längswandteil 1 anliegenden Umfangsrand des Stirnwandteils 2 angeschlossen ist. Beispielsweise ist auch der anliegende Abschnitt des Stirnwandteils 2 lippenartig ausgeführt.

Daher ergibt sich eine solche Ausgestaltung der Kolbenwand 2, dass sie im ausgeschobenen Zustand des Stirnwandteils 3 Widerstand gegen Biegekräfte leistet und damit den Doppelkolben in seiner axialen Lage sichert.

Um bei guter Stabilität mit geringstmöglichem Material auszukommen, ist der Pressstempel 13 im Querschnitt kreuzförmig ausgeführt. Diese kreuzförmige Ausführung hat aber den zusätzlichen Vorteil, dass nach Ausstossung des Doppelkolbens nach unten, unter Einbehaltung der oberen Stirn- oder Kolbenwand 2 innerhalb des Längswandteils 1 eine quirlartige Verbindung zwischen den beiden Stirn- oder Kolbenwandteilen 2, 3 freiliegt, so dass beim Rühren in einem Behälter nicht nur eine Abspülung, sondern zugleich, insbesondere bei Durchführung einer Drehung, eine besonders gute Durchmischung des Konzentrats mit einer Flüssigkeit zur Lösung erfolgt.

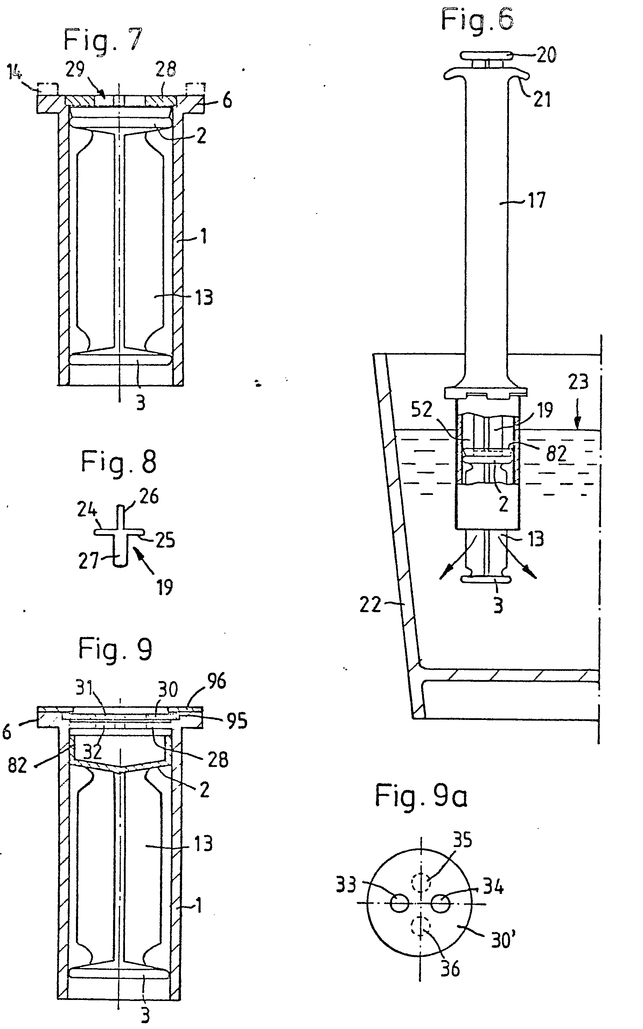

Die durch den Längswandteil 1 in Seitenansicht in Fig. 5 gezeigte Kapsel weist am oberen Ende im Bereich des Befestigungsflansches 6 formal gezeigte Profilierungen 14 als Ausnehmungen für eine Verbindung auf, insbesondere einen Bajonett-Verschluss, dessen Gegenprofilierungen 15 am unteren Ende eines Gegenflansches 16 einer Betätigungseinrichtung 17 angeordnet sind. An dieser Betätigungseinrichtung trägt ein äusseres Rohr 18 den Flansch 16 mit den Gegenprofilierungen. In dem äusseren Rohr 18 ist ein im Querschnitt asymmetrischer Betätigungsstössel 19 mit einem oberen Handgriff 20 längsbeweglich und drehbar geführt. Das äussere Rohr 18 hat einen oberen Flansch 21, um das Halten dieses Rohrs in einer bestimmten axialen Ausrichtung zu erleichtern.

Die Profilierungen 14 und 15 sind in der schematischen Darstellung als Bajonett-Verschluss gezeigt, der durch eine Zusammenschiebung und Drehung der in Eingriff kommenden Teile um einen geringen Winkel geschlossen werden kann. Das ist ein vorteilhaftes Beispiel. Einbezogen wird dabei auch, dass andere Zusammenschlussmittel oder Kupplungsmittel vorgesehen sind. Hinsichtlich der angegebenen Drehung um einen geringen Winkel wird ein Gewindeeingriff mit einer hohen Steigung einbezogen.

Ferner wird einbezogen auch eine entsprechende Kupplung in Form einer Klauenkupplung mit in Umfangsrichtung ausladenden Eingriffsteilen, die sich jedoch nur um einen geringen Drehwinkel erstrecken.

Die Fig. 6 zeigt die Vorrichtung nach Fig. 5 innerhalb eines Behälters 22 mit einem Flüssigkeitsspiegel 23, so dass der im Querschnitt kreuzförmige Pressstempel 13 in die Flüssigkeit gelangt, so dass eine Umspülung, insbesondere auch bei Drehung, einen Rühreffekt erzeugt. Dieser wird im wesentlichen auch durch die Ausgestaltung des Kolbenwandteils 2 als Führungselement mit dem axialen, gegebenenfalls als Dichtungslippe ausgeführten Randansatz 82 gewährleistet.

In Fig. 6 ist erkennbar, dass auch der Betätigungsstössel 19 in den Längswandteil 1 eintritt. Der Betätigungsstössel kann auch im Querschnitt kreuzförmig ausgeführt sein. Hierbei ist jedoch eine asymmetrische Ausgestaltung vorteilhaft, um nicht nur den Eintritt des Betätigungsstössels 19 in den Längswandteil 1 zu ermöglichen, sondern diesen Eintritt auf eine bestimmte Winkelausrichtung festzulegen und die Voraussetzung dafür zu schaffen, dass mit einer Verdrehung gewisse Lösungs- oder Abwurfeffekte erreicht werden können. Diese Drehung wird am Handgriff 20 durchgeführt.

Der Betätigungsstössel 19 hat einen asymmetrischen Querschnitt. Dabei wird ein eckiger Querschnitt, ein ovaler Querschnitt oder dergleichen einbezogen. Nach Fig. 8 hat der Betätigungsstössel 19 einen kreuzförmigen Querschnitt in der Gestaltung, dass drei Schenkel 24–26 im wesentlichen gleiche Abmessung aufweisen, ein vierter Schenkel 27 aber grössere Flächenerstreckung im Querschnitt hat, was sowohl für seine Länge als auch Breite gilt. Das ist zweckmässig für eine verschlüsselte Betätigung der Stirn- oder Kolbenwandteile, insbesondere als Verbund. Bei einem solchen Querschnitt hat eine Deck- oder Stirnplatte am Längswandteil 1 eine entsprechend geformte Durchgangsöffnung.

Nach Fig. 7 ist bezüglich des Längswandteils 1 oberhalb der der Betätigungseinrichtung 17 zugekehrten Fläche des Stirn- oder Kolbenwandteils 2 eine besondere Stirnplatte 28 angeordnet, über der die Profilierungen 14 für den Zusammenschluss mit der Betätigungseinrichtung 17 angeordnet sind. Die Stirnplatte 28 hat eine insgesamt mit 29 bezeichnete Durchtritts- bzw. verschlüsselte Öffnung entsprechend dem Querschnitt in Fig. 8. Diese Querschnittstellung in Ausrichtung der zusammenwirkenden Teile wird erst erreicht, wenn die Verschlussmittel zusammengeschlossen sind, so dass erst dann der Betätigungsstössel 19 durchgeschoben werden kann.

Weil die Stirnplatte 28 fest im Längswandteil 1 angeordnet ist, wird dabei die Voraussetzung geschaffen, dass nach Einführung des Betätigungsstössels 19 durch eine Drehung des Handgriffs 20 der Längswandteil 1 gedreht wird, um die Verbindung zwischen den Profilierungen 14 und 15 zu lösen, so dass die Konzentratkapsel abfallen kann. Eine solche Lösung wird erreicht, indem in Abstand von der Konzentratkapsel am Handgriff 20 der Betätigungseinrichtung eine entsprechende Drehbewegung gegenüber dem Flansch 21 am oberen Ende der Betätigungseinrichtung durchgeführt wird. Sowohl der Flansch 21 als auch der Handgriff 20 befinden sich dabei bezüglich Figur 6 erheblich über dem Flüssigkeitsspiegel in einem Behälter 22.

Die soweit beschriebene Ausführung hat bereits erhebliche Vorteile, auch hinsichtlich einer Vermeidung willkürlicher Betätigung durch nicht berechtigte Personen.

Diese Sicherheit wird noch dadurch verbessert, dass gemäss Fig. 9 über der Stirnplatte 28 innerhalb des Verbandes des Längswandteils 1 und in diesem gegenüber der Stirnplatte 28 drehbar gelagert eine weitere drehbare Scheibe 30 angeordnet ist. Dazu wird bemerkt, dass die Stirnplatte 28 drehfest im Längswandteil 1 vorgesehen ist. Die drehbare Scheibe 30 ist in einer Ausnehmung 95 des Flansches 6 gehalten, in welchem auch die Stirnplatte 28 vorgesehen ist. Diese Ausnehmung ist oben durch eine sie nach innen überlappende und beispielsweise angeklebte Ringscheibe 96 so abgedeckt, dass die Scheibe 30 drehbar, aber nicht axial herausnehmbar ist. Sie hat eine zur Eingriffsprofilierung in der Stirnplatte 28 entsprechende Eingriffsprofilierung 31. In diese kann der profilierte Betätigungsstössel eingreifen, auch nachdem durch Einrastung und Verdrehung des Rohrs der Betätigungseinrichtung letztere festgelegt ist. Dann sucht der Betätigungsstössel 19 durch Drehung des Handgriffs 20 den Eingriff in die drehbare Scheibe 30 und dreht diese dann letzten Endes solange, bis eine Ausrichtung zum profilierten Durchgang 32 in der Stirnplatte 28 gefunden ist, so dass erst dann der Betätigungsstössel durchgestossen werden kann.

Während die Fig. 9 eine Ausführung nach bisheriger Beschreibung erläutert, mit einer von der Mitte her ausgehenden Profilierung des Betätigungsstössels, zeigt die Fig. 9a eine besonders günstige andere Ausgestaltung, die erhöhte Sicherheit bietet. Bei dieser Ausgestaltung besteht der Betätigungsstössel im wesentlichen aus wenigstens zwei mit Abstand angeordneten Zapfen, die aussermittig vorgesehen sind. Diese Zapfen entsprechen den Öffnungen 33, 34 in der in Fig. 9a mit 30′ bezeichneten Scheibe. In der Stirnplatte 28 sind in entsprechender Zuordnung zur Mittelachse zwei Öffnungen 35, 36 angeordnet, die in Fig. 9a in einer Lage gezeigt sind, die um 90° zu den Öffnungen 33, 34 versetzt sind. Dies bedeutet, dass der Betätigungsstössel mit seinen beiden Zapfen bzw. Stangen zunächst in die Öffnungen 33, 34 der drehbaren Scheibe 30′ eingefädelt und dann gedreht werden muss, damit seine beiden Zapfen die Öffnungen 35, 36 finden und durchgestossen werden können, um die Stirn- und Kolbenwandteile 2, 3 auszuschieben.

Diese Ausführung ist deshalb besonders vorteilhaft, weil kein mittiger Durchgang für den Betätigungsstössel vorhanden ist. Einbezogen wird zwischen der Stirnplatte 28 und der Scheibe 30 Dichtungsmaterial.

Einbezogen wird auch, dass die Konzentratkapsel oben und/oder unten von durchstossbaren Folien abgedeckt ist, so dass eine besondere Sicherung erreicht wird und erreichbar ist.

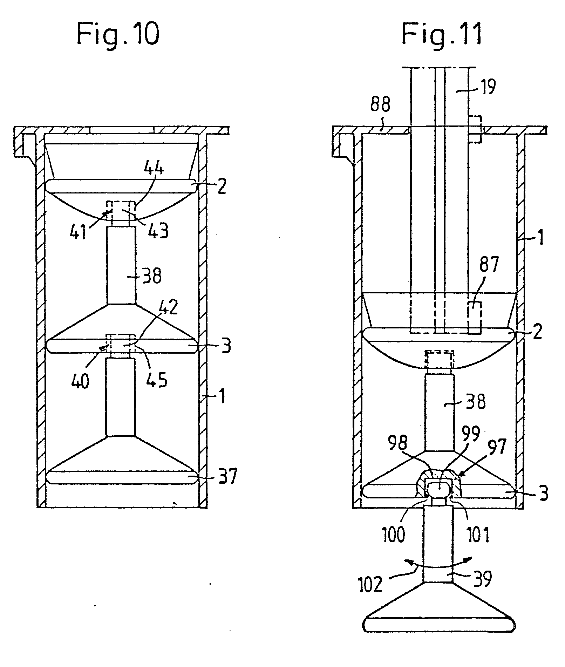

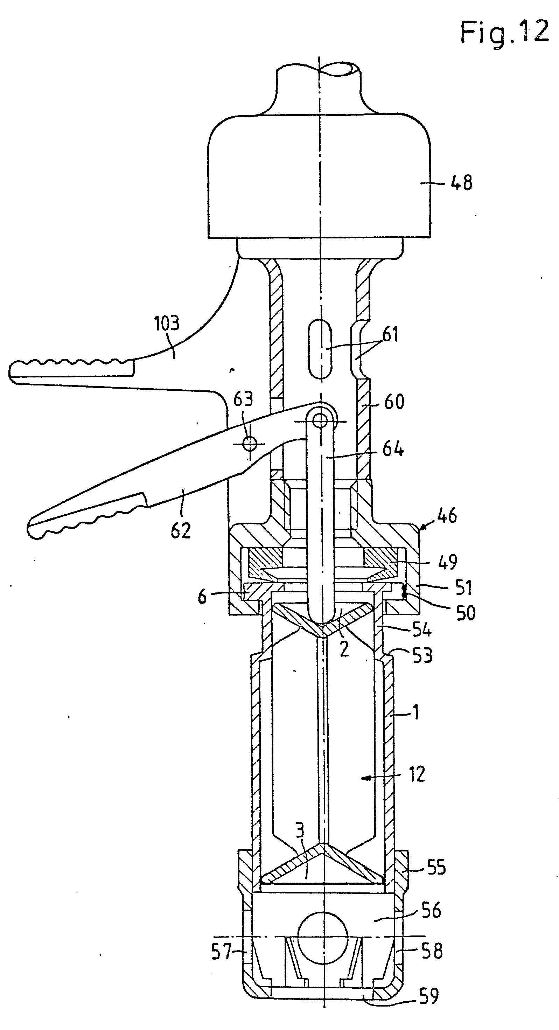

Die Fig. 10 zeigt zunächst innerhalb des Längswandteils 1 eine Aufteilung der Gefässbegrenzung durch mehr als zwei Stirn- oder Kolbenwandteile 2, 3, 37. Hierbei liegt ein Unterschied gegenüber den bisherigen Fig. darin, dass die Pressstempel 38, 39 mit einer in Ausstossrichtung vorn liegenden kolbenartigen Stirnwand 3, 37 fest verbunden sind, aber in der zurückliegenden Stirnwand lösbar, beispielsweise durch eine Steckverbindung 40, 41 fesgelegt sind. Dabei kann ein mittlerer Zapfen 42, 43 der Pressstempel 38, 39 mit Spiel in einer Aufnahmeöffnung 44, 45 angeordnet sein. Bevorzugt wird aber, wie deutlicher in Fig. 11 unten gezeigt ist, dass ein spielfreier Eingriff in den Steckverbindungen 40, 41 vorgesehen ist oder eine druckknopfartige Halterung gemäss Fig. 11 bei 97 gezeigt ist. In einer Aufnahmeöffnung 98 ist dabei ein Pressstempelkopf 99 mit Reibsitz gehalten. Er ist ballig ausgeführt und am unteren Rand der Aufnahmeöffnung 98 sind beispielsweise drei gleichmässig um den Umfang verteilte, nach innen gerichtete noppenartige Ansätze 100, 101 vorgesehen. Der Pressstempelkopf 99 ist dabei flacher ausgeführt als der, der der Tiefe der Aufnahmeöffnung 98 entspricht, so dass eine Verschwenkung entsprechend dem Doppelpfeil 102 möglich ist, ohne dass sich der Pressstempel 39 löst. Er muss abgezogen werden, um die ausgeschobene, kolbenartige Stirnwand freizugeben. Hierdurch ist es möglich, noch den Rühreffekt auszunutzen, wobei aber eine Ablösung erfolgt, wenn die Verschwenkung entsprechend dem Doppelpfeil ein Mass überschreitet, das durch den Befestigungseingriff vorgegeben ist. Dadurch kann die Lösung herbeigeführt werden, indem der Kolbenwandteil 37 am Rande eines Aufnahmebehälters abgewinkelt wird.

Wenn auch bei einem Reib- oder Schiebesitz eine Unterteilung des Innenraums des Längswandteils durch Ausstossen ermöglicht wird, ergibt sich durch die zuletzt beschriebene Ausführung noch ein Zusammenhalt, welcher ein Umrühren unter Einbeziehung des Kolbenwandteils 37 und Pressstempels 39 ermöglicht, bevor dieser abgetrennt wird. Nach Bedarf können daher aus dem Längswandteil 1 ausgeschobene Abschnitte als Rührelement verwendet werden. Diese Anordnung ist vorgesehen, um gegebenenfalls im Zusammenhang mit Vorkehrungen für einen dosierten Ausstoss nur bemessene Chargen auszugeben bzw. solche Chargen nacheinander in einen Behälter freizugeben.

Die Fig. 11 zeigt den in einen Behälter vorragenden Stirn- oder Kolbenwandteil 37, während die beiden Stirn- oder Kolbenwandteile 2, 3 noch im Längswandteil 1 gehalten sind. Der Pressstempel 19 kann für diese Stellung einen Vorsprung 87 haben, der entweder federnd nach innen eindrückbar ist und somit einen fühlbaren Widerstand bei der Bewegung des Betätigungsstössels 19 anzeigt oder dem in der Deckplatte 88 ein Durchgang zugeordnet ist, der erst durch Drehen des Pressstempels 19 gefunden wird. Auch in diesem Falle wird aber eine Bemessung vorgesehen, welche den Durchgang durch einen erhöhten Widerstand anzeigt. Bei letzterer Ausführung findet der Vorsprung 87 erst nach einer Drehung des Pressstempels 19 einen Durchgang in einer Deckplatte 88 bzw. einem Anlage- oder Befestigungsflansch 6, um in einem weiteren Vorschubhub bewegt werden zu können. Auch dieser weitere Bewegungs-Vorschubhub kann durch einen entsprechenden Vorsprung an einer anderen Profilierungskante des Pressstempels 19 begrenzbar sein, um eine Zwischenstufe einer Stirn- oder Kolbenwand 2, 3 freizusetzen.

Figur 12 zeigt eine besondere Ausführungsform, in welcher ein Längswandteil 1 mit einem Kupplungsteil 46 an einem Druckwasserauslass befestigt sein kann. Dieser geht von einem Gehäuse 48 eines Wasserhahns mit Rücksaugsicherung aus. Der Längswandteil 1 ist mit seinem Befestigungsflansch 6 in dem Kupplungsteil 46 aufgenommen, wobei sektorförmige Aussparungen in den Flanschabschnitten zwecks Einführung und anschliessende Halterung durch Verdrehung vorgesehen sind. Eine axiale Abdichtung 49 stellt in diesem Zusammenhang zugleich ein federndes Halteelement dar. Zweckmässig ist aber auch am Befestigungsflansch 6 eine nach aussen zur zylindrischen Wand der Überwurfmutter 46 vorspringende, ringförmige Dichtung 50 als Dichtungslippe angeordnet.

Eine solche Dichtungslippe kann am Flansch 6 (Fig. 1 und 5) oder am Wandteil 51 des Kupplungsteiles 46 angeordnet sein. Eine ringförmige Dichtung 50 als Dichtungslippe bildet im Bereich des Umfanges des Flansches 6 eine vorteilhafte Ausgestaltung dadurch, auch im Hinblick auf die Fig. 6, dass verhindert wird, dass in den Bereich des Anschlusses des Längswandteils 1 in eine Betätigungseinrichtung 17 Flüssigkeit eindringt. Die Fig. 6 zeigt, dass dort der sich erweiternde Hohlraum 52 oberhalb des Doppelkolbens der Wandteile der Konzentratkapsel sich mit Luft aus dem Bereich des Handgriffs 20 füllen soll und nicht etwa mit Flüssigkeit aus dem eingetauchten Ende.

Der Längswandteil 1 in Fig. 12 unterscheidet sich von den bisher beschriebenen Ausführungsformen dadurch, dass zum Befestigungsflansch 6 eine stufenartige Einziehung 53 zu einem im Querschnitt verminderten Wandabschnitt 54 zum Befestigungsflansch 6 hin vorgesehen ist. Am unteren Ende ist durch eine aufgesetzte Verschlusskapsel 55 eine Erweiterung angeordnet, die einen erweiterten Abschnitt 56 herstellt, der radiale Öffnungen 57, 58 und eine Bodenöffnung 59 hat.

Die Doppelkolbenausführung 12 mit den Kolbenwandteilen 2, 3 wird nach einer verhältnismässig geringen Verlagerung aufgrund des einwirkenden hydraulischen Drucks in eine Stellung bewegt, in welcher der zunächst abgedichtete Inhalt zwischen den Kolbenwandteilen 2, 3 unten durch die Öffnungen 57–59 austreten kann. In der gezeigten Ausführung ergibt sich dann noch der Vorteil eines Spüleffektes aus einem Druckwasseranschluss vom Gehäuse 48 her.

Die Figur 12 zeigt eine Ausführungsform, bei der ein Zwischenstück 60 mit Sicherheits-Belüftungsöffnungen 61 angeordnet ist. Ein mechanisches Betätigungsmittel 62 wird einbezogen, das als um einen Schwenkzapfen 63 verdrehbarer, zweiarmiger Hebel einen im Inneren des Zwischenstücks axial geführten Stössel 64 betätigt, der auf den oberen Kolbenwandteil 2 einwirkt, um die Doppelkolbenausführung 12 nach unten auszuschieben, wie bisher beschrieben ist. Eine solche Betätigung ist auch ohne Druckwasseranschluss möglich, wobei das Gehäuse 48 nicht vorhanden ist und die Anordnung an dem dem Betätigungshebel 62 zugeordneten Griff 103 gehalten werden kann.

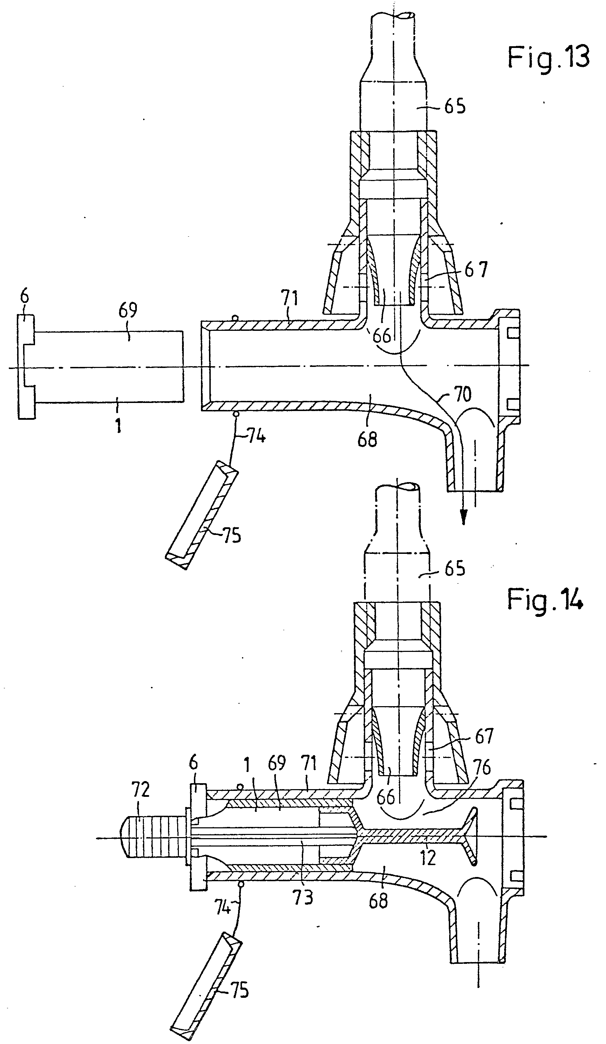

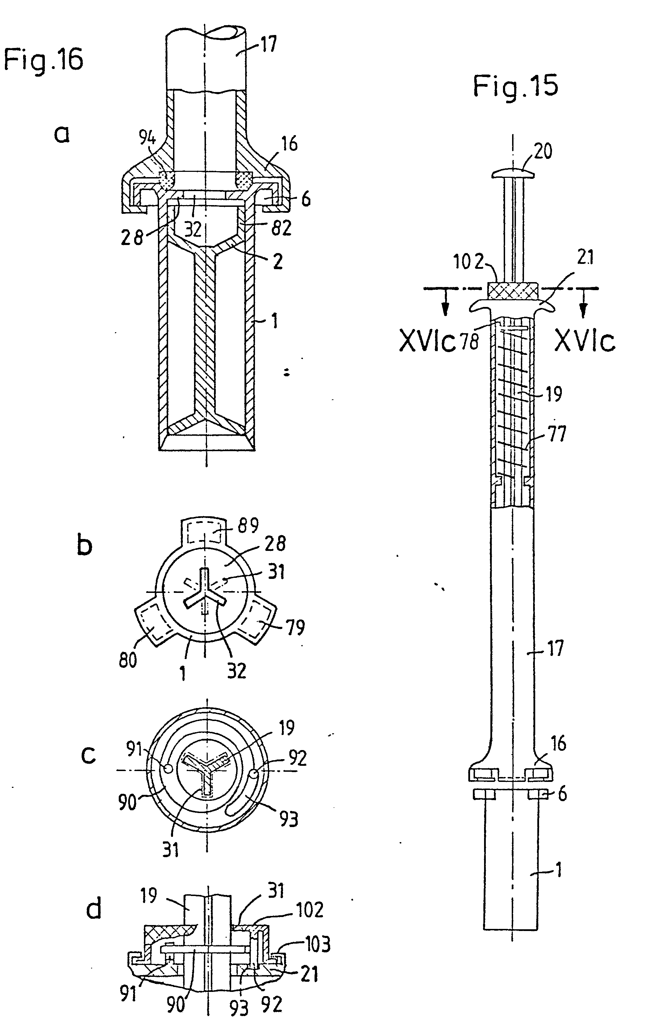

In Fig. 13 ist die Anordnung eines Wasserhahns 65 vorgesehen, in welcher eine Auslassdüse 66 zwischen Sicherheits-Luftdurchlässen 67 angeordnet ist. Ein hahnartiger Gehäuseansatzteil 68 ist zur Aufnahme einer Konzentratkapsel 69 mit dem Längswandteil 1 und dem Befestigungsflansch 6 vorgesehen, so dass eine Durchströmung in Richtung des Pfeils 70 nach Öffnung der Konzentratkapsel in einer der beschriebenen Weise gemäss der Fig. 15 von links das Medium mitnimmt.

Verdeutlicht wird eine solche Ausführung durch Fig. 14 mit dem Wasserhahn 65 und einer eingesetzten Konzentratkapsel 69, wobei der Längswandteil 1 innerhalb eines Stutzens 71 des Gehäuseansatzteils 68 geführt ist. Der Befestigungsflansch 6 ist dabei am Eingang des Stutzens 71 festgelegt. Er enthält alle Mittel für die Anordnung einer Betätigungseinrichtung auch unter Verschlüsselung, wobei die Betätigungseinrichtung einen Schlüsselhandgriff 72 und einen Betätigungsstössel 73 gemäss obiger Beschreibung beinhaltet. Dabei versteht sich, dass am Stutzen 71 durch eine Lasche 74 eine Abdeckkappe 75 befestigt sein kann, die zunächst den Eingang des Stutzens bzw. auch den Befestigungsflansch 6 abschliesst, bevor der Schlüssel mit dem Handgriff 72 eingeführt wird. Fig. 16 zeigt eine Betriebsstellung, in welcher die Doppelkolbenausführung 12 in den Durchströmraum 76 zwischen dem Eingang und Auslass der Anordnung vorgeschoben ist, so dass der gesamte Inhalt ausgegeben wird.

Fig. 15 zeigt anhand der bisher beschriebenen Ausführungsform die Betätigungseinrichtung 17 mit der Massgabe, dass im Inneren eine Feder 77 angeordnet ist, die auf einen Flansch 78 des Betätigungsstössels 19 wirkt, um diesen in die abgehobene Stellung zu bewegen. Eine Betätigung des Handgriffs 20 erfordert zusätzlich zu anderen Ausrichtungsmassnahmen, die beschrieben sind, die Eindrückung des Handgriffs 20 gegen die Kraft der Feder 77.

Fig. 16 ist in Verbindung mit der Fig. 5 ein Beispiel dafür, dass der Betätigungsstössel 19 eine gleichschenkelige Y-Gestalt hat, der eine entsprechende Figuration (32) in der Stirnplatte 28 des Längswandteils 1 zugeordnet ist (Fig. 16b). Die radial nach aussen gerichteten Ansätze 79, 89, 80 stellen äussere Profilierungen im Bereich der Teile 6 und 16 dar, die auch in Fig. 16a gezeigt sind, in der zwei dieser Profilierungen erkennbar sind. Hierbei handelt es sich um Teile eines Bajonettverschlusses. Gemäss Fig. 15 und 16 ist eine drehbare Scheibe 102 für eine zusätzliche Sicherung, vergleichbar mit der drehbaren Scheibe 30, in Fig. 9a erkennbar, aber an anderer Stelle als dort, nämlich an der Betätigungseinrichtung 17, angeordnet und zwar gemäss Fig. 15 und 16d oberhalb des Flansches 21 mit Handgriffen aussen und einer Durchgangsöffnung innen.

In der gezeigten Ausführungsform haben sowohl die Stirnplatte 28 des Längswandteils einen profilierten Durchgang 32 als Eingriffsöffnung als auch die drehbare Scheibe 102 eine entsprechende Eingriffsprofilierung 31 in ihrer Durchgangsöffnung. Für das Profil des Betätigungsstössels 19 in Fig. 16b ist strichpunktiert der profilierte Durchgang 32 in der Stirnplatte 28 erkennbar und strichpunktiert die darüber, d. h. bzw. in Darstellung 16b oberhalb derselben, befindliche Eingriffsprofilierung 31 gezeigt.

Aus den Fig. 16c und d ist erkennbar, dass die drehbare Scheibe 102 gehäuseartig ausgeführt und in einem aufgesetzten Führungsrand 103 drehbar gehalten ist, der lediglich in Fig. 16d angedeutet ist. Andere, eine Drehung zulassende Halteanordnungen am Flansch 21 sind möglich. Zwischen der drehbaren Scheibe 102 und dem oberen Flansch der Betätigungsvorrichtung ist eine Spiralfeder 90 angeordnet. Diese greift einerseits am Widerlager 91 des Flansches 21 und an einem Stift 92 an der drehbaren Scheibe 102 an. Dieser Stift ist mit seinem unteren Ende in einer Nute 93 im Flansch 21 geführt, so dass eine beschränkte Bewegung möglich ist. In entspanntem Zustand drückt die Feder die drehbare Scheibe 102 und damit auch den eingesetzten Betätigungsstössel 19 in eine Stellung gemäss Fig. 16b, in welcher die Eingriffsprofilierung 31 und der profilierte Durchgang 32 winkelmässig zueinander versetzt sind.

Bei Beginn des Ausstosses wird der in der Scheibe 102 eingesetzte und bis zur Stirnplatte 28 vorgeschobene Betätigungsstössel mit seinem Handgriff 20 gegen die Spannung der Feder 90 verdreht, bis die Eingriffsprofilierung 31 mit dem profilierten Durchgang 32 in Überdeckung kommt, so dass dann die Ausstossbewegung stattfinden kann, indem der Betätigungsstössel 19 auf den oberen Stirn- oder Kolbenwandteil 2 des Dosierelements mit den Stirn- oder Kolbenwandteilen gebracht wird.

Dadurch ergibt sich eine besonders wirksame Kindersicherung, weil nicht nur die Einfädelung in profilierte Öffnungen erfolgen muss, sondern eine 2-Hand-Betätigung unerlässlich ist, um die wechselseitigen Ausrichtungen herbeizuführen. Dabei verhindert die Feder 77 eine auch nur kurzzeitige Freigabe des Handgriffs 20 während des Durchgangs.

Die Anordnung einer der Feder 90 entsprechenden Feder ist auch bei anderen Ausführungen, beispielsweise gemäss Fig. 9, mit der drehbaren Scheibe am Längswandteil 1 möglich. Da dieser aber als Einmalartikel vorgesehen ist, ist die Ausführung nach den Figuren 15 und 16 vorteilhaft.

Einbezogen wird, dass die Stellung der Überdeckung der Eingriffsprofilierung 31 und des profilierten Durchganges 32 nicht mit einer Anlage des Stiftes 92 an ein Ende der Nut zusammenfällt.

Wie aus Fig. 16a ersichtlich ist, kann zwischen dem äusseren Rohr 18 der Betätigungsvorrichtung 17 und dem Flansch 16 eine Axialdichtung 94 angeordnet sein, wobei auch vorbehalten bleibt, diese zwischen den Flanschen 6 einerseits und 16 andererseits vorzusehen. Bevorzugt wird eine am Umfang angeordnete Dichtung.

**Patentansprüche**

1. Konzentratkapsel zur Ausgabe wenigstens eines Konzentrats als wenigstens eine Zugabe zu einem Lösungsmittel, mit einem Längswandteil, in welchem ein Konzentrat zwischen stirnseitigen Abschlüssen gehalten ist, in dem Längswandteil (1) in an sich bekannter Weise wenigstens zwei Stirn- oder Kolbenwandteile (2, 3) kolbenartig mit Abdichtung zum Längswandteil (1) beweglich angeordnet sind, der Längswandteil (1) am Ausschubende zylindrisch offen ist, und am anderen Ende des Längswandteils (1) eine Verriegelung (6, 14) für eine Betätigungsvorrichtung zur Verschiebung wenigstens eines Kolbenwandteils (2, 3, 37) in dem Längswandteil (1) und aus diesem heraus vorgesehen und für die Verriegelung ein Anschlusselement (15, 16, 46) eines Betätigungselementes oder -stössels (19, 73) für wenigstens einen Stirn- oder Kolbenwandteil (2, 3) vorgesehen ist.

2. Konzentratkapsel nach Anspruch 1, dadurch gekennzeichnet, dass ein als Führungselement ausgeführter Stirn- oder Kolbenwandteil (2) wenigstens eine sich schräg nach aussen oben erstreckende Dichtungslippe (81) neben dem Umfangsrand des Kolben- oder Stirnwandteils (2) bzw. einen sich an diesen anschliessenden Randansatz (82) aufweist.

3. Konzentratkapsel nach einem der Ansprüche 1–2, dadurch gekennzeichnet, dass wenigstens ein beiden Kolbenwandteilen (2, 3) zugeordneter Pressstempel (10, 13, 38, 39) wenigstens an dem Kolbenwandteil (2, 3) festgelegt ist, an dessen Seite der Längswandteil (1) mit der Verriegelung (6, 14) ausgeführt ist.

4. Konzentratkapsel nach Anspruch 3, gekennzeichnet durch eine an sich bekannte Doppelkolbenausführung (12) der Stirnwandteile (2, 3), in welcher der wenigstens eine Pressstempel (13) mit beiden Stirn- oder Kolbenwandteilen (2, 3) verbunden ist.

5. Konzentratkapsel nach einem der Ansprüche 1–4, dadurch gekennzeichnet, dass mehrere kolbenartige Stirnwände (2, 3, 37) in der Kapsel hintereinander vorgesehen und jeweils durch Pressstempel (38, 39) verbunden sind, und dass die Stirnwände bei Verschiebung aus dem Längswandteil abwerfbar sind.

6. Konzentratkapsel nach Anspruch 5, dadurch gekennzeichnet, dass die Pressstempel (38, 39) jeweils mit einer kolbenartigen Stirnwand (2, 3) in axialer Richtung lösbar verbunden sind, die nach Ausdrückung aus dem Längswandteil (1) abziehbar, insbesondere durch Reibschluss, abstreifbar gehalten ist.

7. Konzentratkapsel nach einem der Ansprüche 1–6, dadurch gekennzeichnet, dass das Ende mit der Verriegelung durch eine Stirnplatte (28) abgedeckt ist, welche eine verschlüsselte Öffnung (29, 35, 36) für ein Betätigungselement (19, 33, 34) aufweist, welche verschlüsselte Öffnung (29, 35, 36) das in axialer Richtung bewegbare Betätigungselement (19, 33, 34) nur in einer Umfangsrichtung einsetzbar zulässt.

8. Konzentratkapsel nach Anspruch 7, dadurch gekennzeichnet, dass das Betätigungselement (19) an wenigstens einem Profilierungsschenkel Abstufungen aufweist, die eine beschränkte Bewegung durch die Stirnplatte (28) zulassen.

9. Konzentratkapsel nach Anspruch 7, dadurch gekennzeichnet, dass der Stirnplatte (28) eine drehbare Scheibe (30) mit einer entsprechend profilierten Eingriffsöffnung (31, 35, 36) zugeordnet ist.

10. Konzentratkapsel nach Anspruch 9, gekennzeichnet durch eine Stelleinrichtung, insbesondere Spiralfeder (90) zwischen der drehbaren Scheibe (30) einerseits und der festen Stirnplatte andererseits und die Führung der drehbaren Scheibe (30) mit einer Eingriffsanordnung (92, 93) an der Stirnplatte (28).

11. Konzentratkapsel nach einem der Ansprüche 1–10, dadurch gekennzeichnet, dass die Eingriffsöffnung unsymmetrisch und flach, insbesondere aber mittig geschlossen und mit aussermittigen Durchgängen (34–36) ausgeführt ist und das Betätigungselement (19) mit entsprechend aussermittig ausgeführten Schubteilen versehen ist.

12. Konzentratkapsel nach einem der Ansprüche 1–11, dadurch gekennzeichnet, dass die kolbenartigen Stirnwände (2, 3) jeweils oberhalb sich erweiternder Abschnitte (56) des Längswandteils (1) geführt sind und nach beschränkter Bewegung entsprechend der Länge eingeschnürter Kapselabschnitte (1, 54; Fig. 12) frei nach unten bewegbar sind.

13. Konzentratkapsel nach einem der Ansprüche 1–12, dadurch gekennzeichnet, dass am Ende des Längswandteils (1) mit der Verriegelung eine Abdichtung (49, 50) für eine Aufnahme eines Betätigungsstössels (19) vorgesehen ist.

14. Konzentratkapsel nach einem der Ansprüche 1, 7–12, dadurch gekennzeichnet, dass ein Drehverschluss wie ein Bajonettverschluss vorgesehen und als Betätigungselement ein Betätigungsstössel (19) nach einem der Ansprüche 4, 7–11, 13 mit einem unrunden Querschnitt vorgesehen ist, wobei durch Verdrehung des Betätigungsstössels (19) eine Lösung des Verschlusses vorgesehen ist.

15. Konzentratkapsel nach einem der Ansprüche 1 oder 2, dadurch gekennzeichnet, dass an dem Ende des Längswandteils (1) ohne Verriegelung die benachbarte Kolbenwand (3) durch eine Lasche (9) befestigt ist.

16. Konzentratkapsel nach einem der Ansprüche 1–15 mit Betätigungseinrichtung, dadurch gekennzeichnet, dass ein Betätigungselement in der Ausführung als unrunder Betätigungsstössel (19) im wesentlichen aus wenigstens zwei mit Abstand angeordneten Zapfen (33, 34) besteht, die aussermittig angeordnet sind, und dass der Betätigungsstössel in einer durch die Konzentratkapsel vorgesehenen Ausrichtung in diese einschiebbar und auf einen Kolbenwandteil (2) aufsetzbar ist, wobei der Betätigungsstössel (19) in einer langgestreckten, rohrartigen Führung (18) bewegbar ist.

17. Konzentratkapsel nach einem der Ansprüche 1–15 mit Betätigungseinrichtung, dadurch gekennzeichnet, dass ein Betätigungselement in der Ausführung als unrunder Betätigungsstössel (19) kreuzförmigen Querschnitt in der Gestaltung aufweist, in welcher drei Schenkel (24–26) im wesentlichen gleiche Abmessungen, ein vierter Schenkel (27) aber grössere Flächenerstreckung im Querschnitt haben und dass der Betätigungsstössel (19) in einer durch die Konzentratkapsel vorgesehenen Ausrichtung in diese einschiebbar und auf einen Kolbenwandteil (2) aufsetzbar ist, wobei der Betätigungsstössel (19) in einer langgestreckten, rohrartigen Führung (18) bewegbar ist.

18. Konzentratkapsel nach Anspruch 16 oder 17, dadurch gekennzeichnet, dass eine zusätzliche Sicherung mittels einer drehbaren Scheibe (102) mit Eingriffsprofilierung (31) entsprechend dem Profil des Betätigungsstössels (19) vorgesehen und durch eine Feder (90) mit einem Wandteil der Betätigungseinrichtung verbunden ist, wobei die Eingriffsprofilierung entsprechend der verschlüsselten Öffnung (29, 35, 36) einer Stirnplatte (28) der Konzentratkapsel ausgeführt ist.

## Claims

1. A concentrate capsule for dispensing at least one concentrate as at least one additive into a solvent, comprising a longitudinal wall part (1), in which a concentrate is held between end closures and which in a manner known per se contains at least two end or piston wall parts (2, 3), which are movably arranged like pistons and sealed at the longitudinal wall part (1), which is cylindrically open at its discharge end and is provided at its other end with locking means (6, 14) for an actuator for displacing at least one piston wall part (2, 3, 37) in and out of the longitudinal wall part (1), and an actuating element or push rod (19, 73), for at least one end or piston wall part (2, 3) is provided with a locking extension (15, 16, 46).

2. A concentrate capsule according to claim 1, characterized in that an end or piston wall part (2) which is designed as a guide element comprises at least one outwardly and upwardly inclined sealing lip (81) beside the peripheral edge of the piston or end wall part (2) of comprises a rim extension (82) adjoining said piston or end wall part (2).

3. A concentrate capsule according to claim 1 or 2, characterized in that at least one push rod (10, 13, 38, 39), which is associated with both piston wall parts (2, 3), is secured at least to that piston wall part (2, 3) on the side of which the longitudinal wall part (1) is provided with the locking means (6, 14).

4. A concentrate capsule according to claim 3, characterized in that the end wall parts (2, 3) constitute in known manner a double piston (12) and the at least one push rod (13) is connected to both end or piston wall parts (2. 3).

5. A concentrate capsule according to any of claims 1 to 4, characterized in that a plurality of pistonlike end walls (2, 3, 37) are consecutively arranged in the capsule and are connected by respective push rods (38, 39) and the end walls are adapted to be displaced so as to be thrown out of the longitudinal wall part.

6. A concentrate capsule according to claim 5, characterized in that each push rod (38, 39) is detachably connected in an axial direction to a pistonlike end wall (2, 3), which is adapted to be forced out of the longitudinal wall part (1) to a position in which the end wall is held, preferably by frictional contact, so that it can be stripped off.

7. A concentrate capsule according to any of claims 1 to 6, characterized in that the end that is provided with the locking means is covered by an end plate (28), which has an encoded opening (29, 35, 36) for an actuating element (19, 33, 34), and said encoded opening (29, 35, 36) permits the axially movable actuating element (19, 33, 34) to be inserted only in a peripheral direction.

8. A concentrate capsule according to claim 7, characterized in that the actuating element (19) is provided at least at one profile leg with steps which permit a restricted movement through the end plate (28).

9. A concentrate capsule according to claim 7, characterized in that the end plate (28) has associated with it a rotatable disc (30) that has a correspondingly profiled receiving opening (31, 35, 36).

10. A concentrate capsule according to claim 9, characterized in that an adjusting device is provided, which particularly consists of a coil spring (90) between the rotatable disc (30), on the one hand, and the fixed end plate, on the other hand, and in that the rotatable disc (30) is guided on the end plate (28) by interengaging means (92, 93).

11. A concentrate capsule according to any of claims 1 to 10, characterized in that the receiving opening is non-symmetrical and flat and in particular is closed at its center and formed with eccentric passages (34 to 36), and the actuating element (19) is provided with correspondingly eccentric sliders.

12. A concentrate capsule according to any of claims 1 to 11, characterized in that the pistonlike end walls (2, 3) are guided above respective flaring sections (56) of the longitudinal wall part (1) and after a restricted movement defined by the length of constricted capsule portions (1, 54; Figure 12) are freely movable downwardly.

13. A concentrate capsule according to any of claims 1 to 12, characterized in that sealing means (49, 50) for receiving an actuating push rod (19) are provided at that end of the longitudinal wall part (1) which is provided with the locking means.

14. A concentrate capsule according to any of claims 1 and 7 to 12, characterized in that the rotary closure is designed like a bayonet joint and an actuating element consists of an actuating push rod (19) as defined to any of claims 4, 7 to 11 and 13, which push rod is non-circular in cross-section and is rotatable to open the joint.

15. A concentrate capsule according to claim 1 or 2, characterized in that the piston wall (3) that is adjacent to that end of the longitudinal wall part (1) where no locking means are provided is secured to that end by a strap (9).

16. A concentrate capsule according to any of claims 1 to 15 and provided with an actuator, characterized in that an actuating element consisting of a non-circular actuating push rod (19) substantially consists of at least two spaced apart, eccentric pins (33, 34) and the actuating push rod is adapted to be slidably inserted into the concentrate capsule in alignment therewith and to be engaged with a piston wall part (2) and is movable in an elongate tubular guide (18).

17. A concentrate capsule according to any of claims 1 to 15 and provided with an actuator, characterized in that an actuating element consists of a non-circular actuating push rod (19), which is cross-shaped in cross-section and comprises three arms (24 to 26) having substantially the same dimensions and a fourth arm (27) having a larger area in cross-section, the actuating push rod (19) is adapted to be slidably inserted into the concentrate capsule in alignment therewith and is engageable with a piston wall part (2), and the actuating stem (19) is movable in an elongate tubular guide (18).

18. A concentrate capsule according to claim 16 or 17, characterized in that additional locking means are constituted by a rotary disc (102) having a receiving portion (31) which is profiled like the actuating push rod (19), said disc is connected by a spring (90) to a wall part of the actuator and the receiving portion is profiled like the encoded opening (29, 35, 36) in an end plate (28) of the concentrate capsule.

**Revendications**

1. Capsule de concentré pour la distribution d'au moins un concentré dans un solvant en utilisant au moins un dosage, avec une partie de paroi longitudinale dans laquelle le concentré est maintenu entre des fermetures frontales, au moins deux éléments de paroi frontale ou de piston (2, 3) étant disposés de façon bien connue en soi et mobile dans la partie de paroi longitudinale (1), à la manière de pistons, et assurant l'étanchéité par rapport à ladite partie de paroi longitudinale (1); la partie de paroi longitudinale (1) présentant une ouverture cylindrique à l'extrémité d'expulsion et un verrouillage (6, 14) étant prévu à l'autre extrémité de la partie de paroi longitudinale (1) pour un dispositif de commande pour le déplacement d'au moins un élément de piston (2, 3, 37) à l'intérieur de la partie de paroi longitudinale (1) et hors de celle-ci, et pour le verrouillage, un élément d'accouplement (15, 16, 46) d'un élément ou poussoir de commande (19, 73) étant prévu pour au moins un élément de paroi frontale ou de piston (2, 3).

2. Capsule de concentré selon la revendication 1, caractérisée en ce qu'un élément de paroi frontale ou de piston (2) conformé en élément de guidage comporte au moins une lèvre d'étanchéité (81) s'étendant en oblique vers le haut et l'extérieur, à côté du bord périphérique de l'élément de paroi frontale ou de piston (2), et respectivement un rebord (82) faisant suite à ce dernier.

3. Capsule de concentré selon l'une des revendications 1 ou 2, caractérisée en ce qu'au moins un chasse-piston (10, 13, 38, 39) associé aux deux éléments de piston (2, 3) est fixé au moins sur l'élément de piston (2, 3) du côté duquel la partie de paroi longitudinale (1) comporte le verrouillage (6, 14).

4. Capsule de concentré selon la revendication 3, caractérisée par une réalisation à piston double (12), bien connue en soi, des éléments de paroi frontale (2, 3) dans laquelle au moins un chasse-piston (13) est rattaché aux deux éléments de paroi frontale ou de piston (2, 3).

5. Capsule de concentré selon l'une quelconque des revendications 1 à 4, caractérisée en ce que plusieurs parois frontales en forme de piston (2, 3, 37) sont prévues l'une derrière l'autre dans la capsule et respectivement reliées par des chasse-pistons (38, 39); et que les parois frontales peuvent être éjectées de la partie de paroi longitudinale au cours du déplacement.

6. Capsule de concentré selon la revendication 5, caractérisée en ce que les chasse-pistons (38, 39) sont respectivement reliés de manière amovible, dans le sens axial, à un élément de paroi frontale (2, 3) en forme de piston lequel est maintenu en place, en particulier par friction, de façon à pouvoir être retiré ou détaché après l'expulsion hors de la partie de paroi longitudinale (1).

7. Capsule de concentré selon l'une des revendications 1 à 6, caractérisée en ce que l'extrémité munie du verrouillage est recouverte par une plaque frontale (28) présentant une ouverture codée (29, 35, 36) pour un élément de commande (19, 33, 34) ladite ouverture codée (29, 35, 36) ne permettant l'introduction de l'élément de commande (19, 33, 34) déplaçable dans le sens axial que dans une seule direction circonférentielle.

8. Capsule de concentré selon la revendication 7, caractérisée en ce que l'élément de commande (19) comporte sur au moins une branche profilée des échelonnements qui autorisent un mouvement limité à travers la plaque frontale (28).

9. Capsule de concentré selon la revendication 7, caractérisée en ce qu'à la plaque frontale (28) est associé un disque rotatif (30) avec une ouverture d'engagement (31, 35, 36) de profil adéquat.

10. Capsule de concentré selon la revendication 9, caractérisée par un dispositif de réglage, en particulier un ressort spiral (90), disposé entre le disque rotatif (30) d'une part et la plaque frontale fixe, d'autre part, et par le guidage du disque rotatif (30) avec un système de mise en prise (92, 93) sur la plaque frontale (28).

11. Capsule de concentré selon l'une quelconque des revendications 1 à 10, caractérisée en ce que l'ouverture d'engagement est de forme asymétrique et plate, mais qu'elle est notamment fermée au centre et présente des passages excentriques (34 à 36) et que l'élément de commande (19) comporte des éléments de poussée disposés dans des positions excentriques correspondantes.

12. Capsule de concentré selon l'une quelconque des revendications 1 à 11, caractérisée en ce que les parois frontales (2, 3) en forme de piston sont respectivement guidées au-dessus de sections (56) de la partie de paroi longitudinale (1) qui s'élargissent et qu'elles peuvent être déplacées librement vers le bas après un mouvement limité correspondant à la longueur des sections de capsule resserrées (1, 54; fig. 12).

13. Capsule de concentré selon l'une quelconque des revendications 1 à 12, caractérisée en ce que, à l'extrémité de la partie de paroi longitudinale (1) avec le verrouillage, il est prévu un joint d'étanchéité (49, 50) pour l'introduction d'un poussoir de commande (19).

14. Capsule de concentré selon l'une quelconque des revendications 1, 7 à 12, caractérisée en ce qu'il comprend un verrouillage tournant, par exemple un emboîtement à baïonnette, et qu'il est prévu comme élément de commande un poussoir de commande (19) selon l'une des revendications 4, 7 à 11, 13 d'une section non circulaire, un déverrouillage pouvant être obtenu par une rotation du poussoir de commande (19).

15. Capsule de concentré selon l'une des revendications 1 ou 2, caractérisée en ce que, à l'extrémité de la partie de paroi longitudinale (1) sans verrouillage, la paroi de piston (3) est fixée par une languette (9).

16. Capsule de concentré selon l'une quelconque des revendications 1 à 15, avec dispositif de commande, caractérisée en ce qu'un élément de commande réalisé sous la forme d'un poussoir de commande (19) de section non circulaire se compose essentiellement de deux tenons (33, 34) excentriques disposés à distance l'un de l'autre, et que le poussoir de commande peut être engagé dans la capsule de concentré, avec un alignement défini par celle-ci, et posé sur un élément de piston (2), le poussoir de commande (19) pouvant être déplacé dans un guidage (18) allongé en forme de tube.

17. Capsule de concentré selon l'une quelconque des revendications 1 à 15, avec dispositif de commande, caractérisée en ce qu'un élément de commande réalisé sous la forme d'un poussoir de commande (19) de section non circulaire présente une section cruciforme dont trois branches (24 à 26) ont sensiblement les mêmes dimensions, alors qu'une quatrième branche (27) présente, en coupe, une surface plus étendue, et que le poussoir de commande (19) peut être engagé dans la capsule de concentré, avec un alignement défini par celle-ci, et posé sur un élément de piston (2), le poussoir de commande (19) pouvant être déplacé dans un guidage (18) allongé en forme de tube.

18. Capsule de concentré selon l'une des revendications 16 ou 17, caractérisée en ce qu'un dispositif de sécurité supplémentaire est prévu sous la forme d'un disque rotatif (102) muni d'un profilage d'engagement (31) correspondant au profil du poussoir de commande (19) et qu'il est relié par un ressort (90) à un élément de paroi du dispositif de commande, le profilage d'engagement étant réalisé conformément à l'ouverture codée (29, 35, 36) d'une plaque frontale (28) de la capsule de concentré.

Fig.1    Fig.2    Fig. 3

Fig.4

Fig.5

Fig. 7

Fig. 8

Fig. 9

Fig. 6

Fig. 9a

## Fig.10

## Fig.11

Fig.12

0 122 514

Fig.13

Fig.14

0 122 514

Fig.16

a

Fig.15

b

c

d

25